# EUROPÄISCHE PATENTSCHRIFT

(11) **EP 1 855 844 B1**
(45) Veröffentlichungstag und Bekanntmachung des Hinweises auf die Patenterteilung: **27.10.2010**
(21) Anmeldenummer: 06701217.9
(22) Anmeldetag: 03.01.2006
(51) Int. Cl.: B25F 5/02

(54) **MECHANISCHE KODIERUNG ZWISCHEN BATTERIEPACK UND ELEKTROWERKZEUG**
MECHANICAL CODING BETWEEN A BATTERY PACK AND AN ELECTRIC TOOL
CODEUR MECANIQUE DISPOSE ENTRE UN BLOC-BATTERIE ET UN OUTIL ELECTRIQUE

(30) Priorität: 22.02.2005 DE 102005008036
(43) Veröffentlichungstag der Anmeldung: 21.11.2007
(60) Teilanmeldung: 09100202.2
(73) Patentinhaber: Robert Bosch GmbH, 70442 Stuttgart (DE)
(72) Erfinder: REJMAN, Marcin, 71332 Waiblingen (DE)
(86) Internationale Anmeldenummer: PCT/EP2006/050008
(87) Internationale Veröffentlichungsnummer: WO 2006/089810

(56) Entgegenhaltungen:
- DE-A1- 4 402 355
- US-B1- 6 551 123

## Beschreibung

Die Erfindung betrifft einen einsteckbaren Batteriepack für ein Elektrowerkzeug gemäß dem Oberbegriff des Anspruchs 1, sowie ein Kodiersystem gemäß dem Oberbegriff des Anspruchs 15, sowie ein Elektrowerkzeug gemäß dem Oberbegriff des Anspruchs 16.

Ein solches Elektrowerkzeug mit einem solchen Batteriepack ist aus US 6 551 123 B1 bekannt.

Zur Sicherstellung der Zuordnung des passenden Batteriepacks zum Elektrowerkzeug ist es bekannt, mechanische Kodiersysteme einzusetzen, die das Einstecken und elektrische Anschließen des Batteriepacks nur dann zulassen, wenn der Batteriepack eine Kodierung aufweist, die mit der Gegenkodierung des Elektrowerkzeugs korrespondiert. Die bisherigen Kodierlösungen haben jedoch den Nachteil, dass beim Aufbringen hinreichend großer, insbesondere unzulässig großer Einsteckkräfte die mechanischen Kodierungselemente durch Seitenauslenkung zerstört oder "überdrückt" werden können, sodass auch nicht vorgesehene Batteriepacks in den Aufnahmeschacht des Elektrowerkzeugs eingebracht werden können. Unter "Batteriepack" ist im Zuge dieser Anmeldung ein vorzugsweise aus mehreren Zellen bestehendes Akkumulatorenpaket zu verstehen, das für den Betrieb des Elektrowerkzeugs die Energie liefert und austauschbar in einer Kammer oder dergleichen des Elektrowerkzeugs aufgenommen ist. Das Zuordnen des Batteriepacks zum Elektrowerkzeug erfolgt durch Einstecken beziehungsweise Einschieben. Ist die Energie des Batteriepacks verbraucht, so kann er entnommen und einer Ladestation zugeführt werden. Stehen mehrere Batteriepäcke zur Verfügung, so ist es möglich, den entladenen Batteriepack aus dem Elektrowerkzeug zu entnehmen und gegen einen geladenen auszutauschen. Um nun bei einem Austausch oder bei einer Wiederzuordnung zu verhindern, dass ein falscher Batteriepack dem Elektrowerkzeug zugeordnet wird, was insbesondere dann erfolgen könnte, wenn mehrere verschiedene Batteriepäcke für verschiedene elektrische Geräte zur Verfügung stehen, ist ein sicheres und im Wesentliches nicht manipulierbares Kodiersystem erforderlich. Auch soll ein derartiges Kodiersystem unzulässige Batteriepäcke ausschließen, die dem Elektrowerkzeug nicht zugeordnet werden sollen.

Aufgrund der Erfindung ergibt sich der Vorteil, dass Fehimanipulationen, also die Zuordnung von nicht zulässigen Batteriepäcken zu dem Elektrowerkzeug durch einen Batteriepack gemäß Anspruch 1, durch ein Kodiersystem gemäß Anspruch 15, und durch ein Elektrowerkzeug gemäß Anspruch 16 vermieden werden.

Eine Weiterbildung der Erfindung sieht vor, dass die Vertiefung mindestens zwei, einander der Dicke des Vorsprungs entsprechend gegenüberliegende Wandflächenbereiche aufweist. Zwischen diese beiden Wandflächenbereiche tritt bei der Zuordnung des Batteriepacks zum Elektrowerkzeug der Vorsprung, das heißt, die beiden Wandflächenbereiche nehmen den Vorsprung zwischen sich führend auf. Es wird hierdurch klar, dass eine seitliche Verbiegung des Vorsprungs zu einer Blockade führen würde, sodass die Einsteckbewegung des Batteriepacks gestoppt ist und auch größere Kräfte diesen Stopp nicht überwinden können.

Es ist vorteilhaft, wenn die Vertiefung eine umfänglich geschlossene Vertiefung ist. Hierunter ist eine Vertiefung zu verstehen, dessen Vertiefungsrand eine in sich geschlossene schleifenförmige Linie beschreibt. Alternativ ist es auch möglich, dass die Vertiefung eine randoffene Vertiefung ist, das heißt, sie ist -von der Seite her- durch mindestens eine Öffnung zugänglich, das heißt, ihr Rand ist nicht eine in sich geschlossene schleifenförmige Linie, sondern bildet beispielsweise ein offenes U.

Ferner ist es vorteilhaft, wenn die Vertiefung eine eineckige, mehreckige, bogenförmige und/oder kreisförmige Grundrissstruktur aufweist. Die entsprechende Grundrissstruktur ist korrespondierend bei dem Vorsprung vorhanden, sodass eine eineindeutige Zuordnung von Vorsprung zu Vertiefung möglich ist. Hierdurch werden Verdrehstellungen zwischen dem Batteriepack und dem Elektrowerkzeug ausgeschlossen.

Die Vertiefung ist vorzugsweise als zylindrische Vertiefung ausgebildet, das heißt, ihre Wandflächen verlaufen parallel zueinander. Sie verjüngen sich nicht nach unten zum Vertiefungsgrund hin, sondern verlaufen parallel zur Einsteckrichtung. Unter "zylindrisch" ist demgemäß zu verstehen, dass eine gedanklich vom Vertiefungsrand zum Vertiefungsgrund verlaufende Linie parallel zu sich entlang einer beliebigen, geschlossenen oder nicht geschlossenen, die Zylinderkontur definierende Kurve verschoben wird, sodass die Vertiefung gegenüber der Einsteckrichtung keine schräg stehenden Flächen oder Wandabschnitte oder dergleichen aufweist.

Eine Weiterbildung der Erfindung sieht vor, dass die Vertiefung in der Nachbarschaft von elektrischen Kontakten des Batteriepacks angeordnet ist. Dies ist deshalb von Vorteil, weil dann in der Nachbarschaft der elektrischen Kontakte die Sperrwirkung nicht passender Kodierungselemente ausgeübt wird und dadurch sicher eine Kontaktierung des Batteriepacks mit den entsprechenden Anschlüssen des Elektrowerkzeugs verhindert wird.

Insbesondere kann vorgesehen sein, dass die Vertiefung zwischen mindestens zwei elektrischen Kontakten des Batteriepacks angeordnet ist. Dies führt ebenfalls zu den vorstehend erwähnten Vorteilen.

Eine Weiterbildung der Erfindung sieht vor, dass die Vertiefung an einem Kontaktdom des Batteriepacks ausgebildet ist. Dieser Kontaktdom trägt einerseits die Kodierung und andererseits auch die elektrischen Kontaktelemente, um eine elektrische Verbindung vom Batteriepack zum Elektrowerkzeug durch Einstecken des Batteriepacks in das Elektrowerkzeug herzustellen.

Vorzugsweise ist die Vertiefung und/oder der Kontaktdom exzentrisch zur Grundflächenmitte des Batteriepacks angeordnet, sodass Verdrehstellungen ausgeschlossen werden und demgemäß der Batteriepack nur in einer einzigen Position dem Elektrowerkzeug zugeführt werden kann.

Um eine Vielzahl von Permutation zu schaffen, das heißt, um bestimmte Batteriepäcke in ein Elektrowerkzeug einstecken zu können, und andere, möglicherweise mit gleichen elektrischen Parametern ausgestattete Batteriepäcke für ein bestimmtes Elektrowerkzeug jedoch auszuschließen, ist vorgesehen, dass von der Wand der Vertiefung mindestens eine Kodierrippe ausgeht. Die Kodierrippe führt neben der bereits durch den Vorsprung und die Vertiefung gebildeten Kodierungseinheit zu einer weiteren, verfeinerten Kodiermaßnahme. Dies ist insbesondere dann gegeben, wenn die Kodierrippe zur Ausbildung unterschiedlicher Permutationen an einer von mehreren unterschiedlichen Positionen bestimmten Positionen von der Wand der Vertiefung ausgeht. Es gibt demgemäß Batteriepäcke mit Kodierrippen, die sich von anderen Batteriepäcken mit Kodierrippen dadurch unterscheiden, dass die Kodierrippen der verschiedenen Batteriepack-Ausführungen an unterschiedlichen Positionen innerhalb der Vertiefung -ausgehend von der Wand der Vertiefung- angeordnet sind, sodass hierdurch eine Permutationsunterscheidung realisiert wird. Diese verschiedenen Permutationen sind natürlich nur dann realisiert, wenn der Vorsprung eine entsprechende, also die Kodierrippe oder die Kodierrippen berücksichtigende Formgebung, insbesondere Grundrissstruktur, aufweist.

Eine Weiterbildung der Erfindung sieht vor, dass von der Wand der Vertiefung mindestens ein Kodierrippenpaar ausgeht, dessen Kodierrippen einander derart gegenüberliegen, dass sie sich zumindest teilweise überlappen. Demgemäß besteht ein Kodierrippenpaar aus zwei Kodierrippen, die einander mit Abstand derart gegenüberliegen, das sich zwischen ihre Stirnflächen der Vorsprung beim Einstecken des Batteriepacks in das Elektrowerkzeug einfädeln kann. Dabei ist es nicht erforderlich, dass die beiden Kodierrippen -quer zur Einsteckrichtung gesehen- miteinander fluchten, also gleich breit sind und in einer Flucht hintereinander liegen (fluchtende Stimflächen), sondern es können auch Kodierrippen eingesetzt werden, die nicht die gleiche Breite aufweisen und ein Kodierrippenpaar bilden und/oder die versetzt zueinander liegen, wobei jedoch die Versetzung nicht derart groß ist, dass zwischen ihnen ein seitlicher Freiraum entsteht, sondern die Stirnflächen überlappen sich zumindest teilweise.

Eine Weiterbildung der Erfindung sieht vor, dass an die randoffene Vertiefung mindestens eine, einem Bereich des Vorsprungs gegenüberliegende Außenwandfläche angrenzt. Demgemäß wird auch zumindest ein außerhalb der randoffenen Vertiefung liegender Bereich mit für das Kodiersystem genutzt, indem sich der Vorsprung nicht nur in der randoffenen Vertiefung erstreckt, sondern in die seitliche Öffnung der Vertiefung ebenfalls eindringt und zu einer dort liegenden Außenwandfläche, die an die Vertiefung angrenzt, in Gegenüberlage tritt. Hierdurch wird die Permutationsvielfalt erhöht und auch die Sicherheit des Permutationssystems aufgrund großflächigerer Elementausbildungen erhöht.

Schließlich betrifft die Erfindung ein Kodiersystem für ein mit einem einschiebbaren Batteriepack, insbesondere nach einer oder mehrerer der vorhergehenden Aus- beziehungsweise Weiterbildungen, versehenes Elektrowerkzeug, wobei der Batteriepack eine mechanische Kodierung und das Elektrowerkzeug eine mechanische Gegenkodierung aufweist und sich Kodierung und Gegenkodierung in Einsteckrichtung erstrecken, wobei die Kodierung als mindestens eine Vertiefung und die Gegenkodierung als mindestens ein Vorsprung ausgebildet ist und Kodierung und Gegenkodierung formpassend aufeinander abgestimmt sind und bei eingeschobenem Batteriepack ineinander greifen. Hierbei ist insbesondere vorgesehen, dass der Vorsprung mit einander gegenüberliegenden Seiten der Vertiefung zusammenwirkt.

Die Zeichnungen veranschaulichen die Erfindung anhand mehrerer Ausführungsbeispiele, und zwar zeigt:
- Figur 1: eine perspektivische Ansicht auf eine Kodierung eines einsteckbaren Batteriepacks für ein Elektrowerkzeug,
- Figur 2: einen Abschnitt eines Elektrowerkzeugs, das eine zur Kodierung der Figur 1 passende Gegenkodierung auf- weist, und
- Figur 3: eine andersartige Gegenkodierung eines Elektrowerk- zeugs.

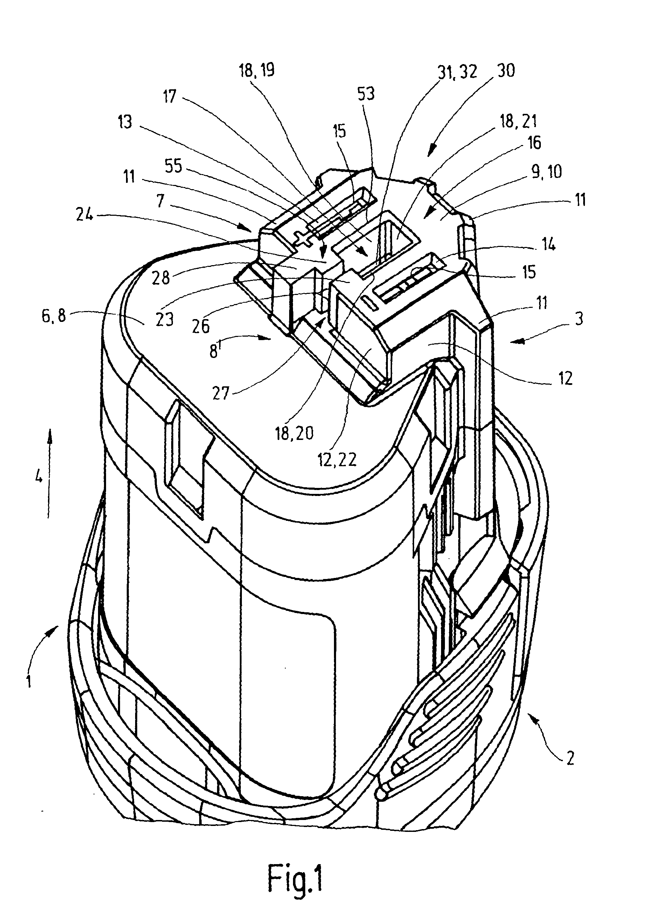

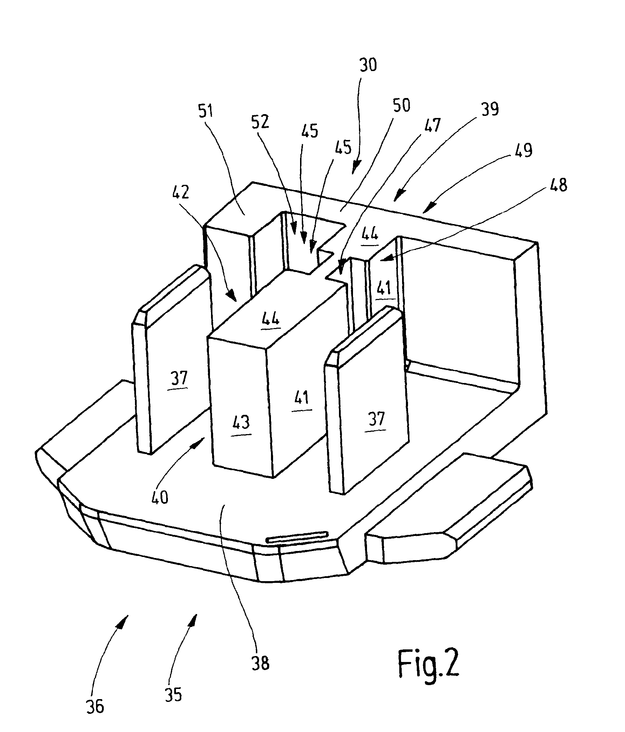

Figur 1 zeigt einen Ausschnitt eines einsteckbaren Batteriepacks 1 für ein nicht dargestelltes Elektrowerkzeug. Der Batteriepack 1 weist eine Handhabe 2 auf, an der er vom Benutzer gehalten werden kann, um ihn beispielsweise aus einem Ladegerät zu nehmen und mit einem Einsteckbereich 3 in Einsteckrichtung 4 in ein Elektrowerkzeug einzustecken. Der Einsteckbereich 3 weist eine Stirnfläche 6 auf, die eine Grundfläche 8 bildet und senkrecht zur Einsteckrichtung 4 verläuft. Auf der Stirnfläche 6 ist ein Kontaktdom 7 angeordnet. Dieser Kontaktdom 7 ist gegenüber der Grundflächenmitte 8' des Batteriepacks 1 exzentrisch angeordnet. Der Kontaktdom 7 erstreckt sich im Wesentlichen in Richtung Einsteckrichtung 4. Der Kontaktdom 7 besitzt eine Oberseite 9, die eine Stirnfläche 10 aufweist, die parallel zu der Stirnfläche 6, also senkrecht zur Einsteckrichtung 4, verläuft, sowie Schrägflächen 11. Der Kontaktdom 7 weist Seitenflächen 12 auf, die senkrecht zu der Stirnfläche 6 und der Stirnfläche 10 verlaufen. In der Stirnfläche 10 des Kontaktdoms 7 sind zwei Kontaktöffnungen 13 und 14 ausgebildet, in denen elektrische Kontakte 15 angeordnet sind. Der Kontaktdom 7 weist ferner eine mechanische Kodierung 16 auf, die zusammen mit einer in Figur 1 nicht dargestellten Gegenkodierung des Elektrowerkzeugs ein Kodiersystem 30 bildet. Auf die Gegenkodierung wird bei der Abhandlung der Figur 2 eingegangen. Die mechanische Kodierung 16 des Batteriepacks 1 weist eine Vertiefung 17 auf. Die Vertiefung 17 besitzt eine rechteckige Grundfläche 31, die einen Vertiefungsgrund 32 der Vertiefung 17 bildet. Die Vertiefung 17 weist eine Wand 18 auf, die sich aus Wandflächenbereichen 19, 20 und 21 zusammensetzt. Die Wand 18 verläuft parallel zur Einsteckrichtung 4. Die Wandflächenbereiche 19 und 20 liegen einander parallel verlaufend gegenüber. Der Wandflächenbereich 21 verläuft jeweils rechtwinklig zu den Wandflächenbereichen 19 und 20. Die dem Wandflächenbereich 21 gegenüberliegende Seite der Vertiefung 17 ist randoffen ausgebildet, das heißt, die Vertiefung 17 mündet in eine Außenwandfläche 22, die eine der Seitenflächen 12 des Kontaktdoms 7 bildet. Ferner ist der Figur 1 zu entnehmen, dass von den beiden, einander gegenüberliegenden Wandflächenbereichen 19 und 20 Kodierrippen 23 und 24 ausgehen, die einander fluchtend mit beabstandet zueinander liegenden Stirnflächen 26 gegenüberliegen. Dies bedeutet, dass zwischen den Stirnflächen 26 ein Zwischenraum 27 ausgebildet wird. Die Kodierrippen 23 und 24 bewirken eine verfeinerte Kodiermaßnahme der Vertiefung 17. Die Vertiefung 17 ist zumindest Bereichsweise zwischen den Kontakten 15 angeordnet. Von der Außenwandfläche 22 geht eine Rippe 28 aus, die ebenfalls Bestandteil des Kodiersystems 30 ist, also der Kodierung 16 angehört. Alternativ ist es auch möglich, dass eine derartige Rippe 28 nicht vorhanden ist (nicht dargestellt).

Die Figur 2 zeigt einen Abschnitt 35 eines ansonsten nicht näher dargestellten Elektrowerkzeugs 36, in das der Batteriepack 1 einsteckbar ist. Der Einsteckschacht, der den Batteriepack 1 aufnimmt, ist in Figur 2 nicht dargestellt. Der Abschnitt 35 des Elektrowerkzeugs 36 besitzt zwei Kontaktzungen 37, die im eingesteckten Zustand des Batteriepacks 1 mit den Kontakten 15 zusammenwirken. Hierdurch wird die elektrische Energie des Batteriepacks 1 dem Elektrowerkzeug 36 zugeführt. Die beiden Kontaktzungen 37 gehen von einer Grundebene 38 des Elektrowerkzeugs 36 aus, auf der ferner eine Gegenkodierung 39 des Kodiersystems 30 angeordnet ist. Die Gegenkodierung 39 wirkt beim Einstecken des Batteriepacks 1 mit der Kodierung 16 derart zusammen, dass nur bei Koinzidenz von Kodierung 16 und Gegenkodierung 39 ein Einbringen des Batteriepacks möglich ist.

Die Gegenkodierung 39 weist einen Vorsprung 40 auf, der zwei einander gegenüberliegende Wandflächen 41 und 42 sowie eine Stirnfläche 43 und eine Kopffläche 44 aufweist. Ferner besitzt der Vorsprung 40 eine Taille 45, die aufgrund zweier Einschnitte 46 und 47 in den Wandflächen 41 und 42 ausgebildet wird. Der Abstand der beiden Wandflächen 41 und 42 entspricht -unter Berücksichtigung eines sehr geringen Spiels- dem Abstand der Wandflächenbereiche 19 und 20 der Vertiefung 17. Ferner entsprechen die Einschnitte 46 und 47 in ihren Abmessungen den Konturen der beiden Kodierrippen 23 und 24, wobei ebenfalls ein geringfügiges Spiel Berücksichtigung findet. Die Anordnung ist ferner derart getroffen, dass der jenseits der Taille 45 gelegene Bereich 48 des Vorsprungs 40 beim Zusammenführen von Kodierung 16 und Gegenkodierung 39 neben der Rippe 28 der Kodierung 16 zu liegen kommt. An den Vorsprung 40 schließt sich ein L-förmiger Wandbereich 49 an, der einen Schenkel 50 und einen Querschenkel 51 aufweist. Zwischen dem Querschenkel 51, dem Schenkel 50 und dem Bereich 48 des Vorsprungs 40 wird ein Einschnitt 52 ausgebildet, dessen Dimensionen -unter Berücksichtigung eines gewissen Spieles- den Dimensionen der Rippe 28 der Kodierung 16 entsprechen.

Aus dem Vorhergehenden wird deutlich, dass sich bei der Zuordnung des Batteriepacks 1 zum Elektrowerkzeug 36 folgende Kodierfunktion einstellt: Der Vorsprung 40 fährt formpassend in die Vertiefung 17 ein, wobei die beiden Kodierrippen 23 und 24 in die Einschnitte 46 und 47 einfahren und die Rippe 28 in den Einschnitt 52 eintritt. Wie bereits vorstehend erwähnt, ist es nicht erforderlich, dass für die Kodierfunktion eine Rippe 28 vorhanden ist. Dementsprechend kann auch dann bei der Gegenkodierung 39 der L-förmige Wandbereich 49 entfallen.

Sollte eine Batteriepack 1 verwendet werden, dessen Kodierung 16 nicht formpassend zur Gegenkodierung 39 des Elektrowerkzeugs 36 ausgebildet ist, weil beispielsweise der Abstand zwischen den beiden Wandflächenbereichen 19 und 20 kleiner ist, als der Abstand der Wandflächen 41 und 42 des Vorsprungs 40, so ist das aus dem Stand der Technik bekannte "Überdrücken" nicht möglich, das heißt, Vorsprung 40 und Vertiefung 17 lassen sich -auch bei sehr großer Kraftaufwendung- nicht zusammenfügen, weil ein seitliches Ausweichen des Vorsprungs 40 deshalb nicht möglich ist, da die Kopffläche 44 des Vorsprungs 40 auf den Vertiefungsrandbereich 53 der Kodierung 16 aufsetzen würde und daher ein weiteres Einschieben blockiert.

Um die Permutationsvielfalt von Kodierung 16 und Gegenkodierung 39 zu erhöhen, kann -gemäß nicht dargestellter Ausführungsbeispiele- vorgesehen sein, dass sich die beiden Kodierrippen 23 und 24, die ein Kodierrippenpaar 55 an entsprechend unterschiedlichen Positionen von der Wand 18 der Vertiefung 17 ausgehen. Beispielsweise können die beiden Kodierrippen 23 und 24 gegenüber der aus der Figur 1 hervorgehenden Position näher zum Wandflächenbereich 21 der Vertiefung 17 liegend angeordnet sein. Zum Aufbau eines Permutationssystems können entsprechende Rasterabstände für die verschiedenen Positionen des Kodierrippenpaars 55 vorgesehen sein. Dabei ist es auch möglich, dass die beiden Kodierrippen 23 und 24 -anders als in der Figur 1- nicht fluchtend zueinander liegen, sondern derart leicht versetzt zueinander angeordnet sind, dass sich ihre beiden Stirnflächen 26 nur teilweise gegenüberstehen. Ferner ist es auch alternativ oder zusätzlich möglich, dass weitere Kodierrippen oder weitere Kodierrippenpaare vorgesehen sind. Dementsprechend ist dann die Struktur des Vorsprungs gestaltet.

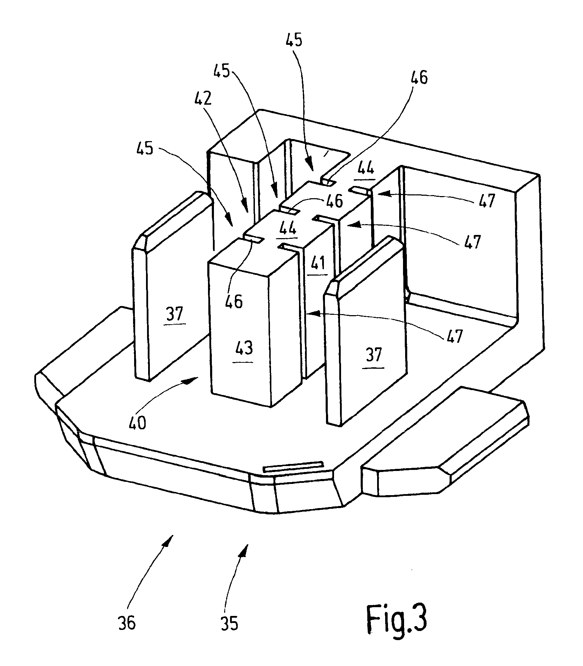

Die Figur 3 zeigt ein Ausführungsbeispiel, bei dem beispielsweise der Vorsprung 40 drei Taillen 45 aufweist, das heißt, da demzufolge die Gegenkodierung 39 mit drei Einschnitten 46 und drei Einschnitten 47 versehen ist, wird die formpassend dazu ausgestaltete, nicht dargestellte Kodierung 16 drei Kodierrippenpaare 55 aufweisen. Aus alledem wird deutlich, dass das so geschaffene Kodiersystem 30 eine sehr große Anzahl von Permutationen zulässt.

## Patentansprüche

1. Einsteckbarer Batteriepack für ein Elektrowerkzeug, mit einer mechanischen Kodierung eines Kodiersystems für ein Zusammenwirken mit einer dem Elektrowerkzeug zugeordneten, mechanischen Gegenkodierung des Kodiersystems, wobei sich die Kodierung (16) in Einsteckrichtung des Batteriepacks erstreckt und die Kodierung (16) mindestens eine mit mindestens einem werkzeugseitigen, die Gegenkodierung (39) bildenden Vorsprung (40) an gegenüberliegenden Seiten zusammenwirkende Vertiefung (17) aufweist, **dadurch gekennzeichnet, dass** von einer Wand (18) der Vertiefung (17) mindestens eine Kodierrippe (23, 24) ausgeht.

2. Batteriepack nach Anspruch 1, **dadurch gekennzeichnet, dass** die Vertiefung (17) mindestens zwei, einander der Dicke des Vorsprungs (40) entsprechend gegenüberliegende Wandflächenbereiche (19, 20) aufweist.

3. Batteriepack nach einem der vorhergehenden Ansprüche, **dadurch gekennzeichnet, dass** die Vertiefung (17) eine umfänglich geschlossene Vertiefung (17) ist.

4. Batteriepack nach einem der Ansprüche 1 oder 2, **dadurch gekennzeichnet, dass** die Vertiefung (17) eine randoffene Vertiefung (17) ist.

5. Batteriepack nach einem der vorhergehenden Ansprüche, **dadurch gekennzeichnet, dass** die Vertiefung (17) eine eineckige, mehreckige, bogenförmige und/oder kreisförmige Grundrissstruktur aufweist.

6. Batteriepack nach einem der vorhergehenden Ansprüche, **dadurch gekennzeichnet, dass** die Vertiefung (17) eine zylindrische Vertiefung (17) ist.

7. Batteriepack nach einem der vorhergehenden Ansprüche, **dadurch gekennzeichnet, dass** die Vertiefung (17) in der Nachbarschaft von elektrischen Kontakten (15) des Batteriepacks (1) angeordnet ist.

8. Batteriepack nach einem der vorhergehenden Ansprüche, **dadurch gekennzeichnet, dass** die Vertiefung (17) zwischen mindestens zwei elektrischen Kontakten (15) des Batteriepacks (1) angeordnet ist.

9. Batteriepack nach einem der vorhergehenden Ansprüche, **dadurch gekennzeichnet, dass** die Vertiefung (17) an einem Kontaktdom (7) des Batteriepacks (1) ausgebildet ist.

10. Batteriepack nach einem der vorhergehenden Ansprüche, **dadurch gekennzeichnet, dass** die Vertiefung (17) und/oder der Kontaktdom (7) exzentrisch zur Grundflächenmitte (8') des Batteriepacks (1) angeordnet ist/sind.

11. Batteriepack nach einem der vorhergehenden Ansprüche, **dadurch gekennzeichnet, dass** die Kodierrippe (23, 24) zur Ausbildung unterschiedlicher Permutationen an einer von mehreren unterschiedlichen Positionen bestimmten Position von der Wand (18) der Vertiefung (17) ausgeht.

12. Batteriepack nach einem der vorhergehenden Ansprüche, **dadurch gekennzeichnet, dass** von der Wand (18) der Vertiefung (17) mindestens ein Kodierrippenpaar (55) ausgeht, dessen Kodierrippen (23, 24) einander derart gegenüberliegen, dass sie sich zumindest teilweise überlappen.

13. Batteriepack nach einem der Ansprüche 4 bis 12, **dadurch gekennzeichnet, dass** an die randoffene Vertiefung (17) mindestens eine, einem Bereich des Vorsprungs (40) gegenüberliegende Außenwandfläche (22) angrenzt.

14. Batteriepack nach Anspruch 13, **dadurch gekennzeichnet, dass** von der Außenwandfläche (22) mindestens eine Kodierrippe (28) ausgeht.

15. Kodiersystem für ein mit einem einsteckbaren Batteriepack insbesondere nach einem oder mehreren der vorhergehenden Ansprüche versehenes Elektrowerkzeug, wobei der Batteriepack eine mechanische Kodierung und das Elektrowerkzeug eine mechanische Gegenkodierung aufweist und sich Kodierung und Gegenkodierung in Einsteckrichtung erstrecken und die Kodierung (16) als mindestens eine Vertiefung (17) und die Gegenkodierung (39) als mindestens ein Vorsprung (40) ausgebildet ist, wobei Kodierung (16) und Gegenkodierung (39) formpassend aufeinander abgestimmt sind und bei eingeschobenem Batteriepack (1) ineinander greifen, **dadurch gekennzeichnet, dass** eine Wand (18) der Vertiefung (17) mindestens eine Kodierrippe (23, 24) aufweist und der Vorsprung (40) mindestens ein Einschnitt (46, 47) aufweist.

16. Elektrowerkzeug mit einer mechanischen Gegenkodierung eines Kodiersystems für ein Zusammenwirken mit einer einem einsteckbaren Batteriepack zugeordneten, mechanischen Kodierung des Kodiersystems, wobei sich die Gegenkodierung (39) in Einsteckrichtung des Batteriepacks erstreckt und die Gegenkodierung (39) mindestens einen mit mindestens einer batteriepackseitigen, die Kodierung (16) bildenden Vertiefung (17) an gegenüberliegenden Seiten zusammenwirkenden Vorsprung (40) aufweist, **dadurch gekennzeichnet, dass** der Vorsprung (40) mindestens einen Einschnitt (46, 47) aufweist.

## Claims

1. Insertable battery pack for an electric tool, having a mechanical coding of a coding system for interaction with an opposite mechanical coding of the coding system assigned to the electric tool, wherein the coding (16) extends in the insertion direction of the battery pack, and the coding (16) has at least one depression (17) which interacts on opposite sides with at least one projection (40), which is on the tool side and forms the opposite coding (39), **characterized in that** at least one coding rib (23, 24) emerges from a wall (18) of the depression (17).

2. Battery pack according to Claim 1, **characterized in that** the depression (17) has at least two wall surface regions (19, 20) which lie opposite each other in a manner corresponding to the thickness of the projection (40).

3. Battery pack according to one of the preceding claims, **characterized in that** the depression (17) is a peripherally closed depression (17).

4. Battery pack according to either of Claims 1 and 2, **characterized in that** the depression (17) is a depression (17) which is open at the edge.

5. Battery pack according to one of the preceding claims, **characterized in that** the depression (17) has a contour structure which has a single corner, or is polygonal, arcuate and/or circular.

6. Battery pack according to one of the preceding claims, **characterized in that** the depression (17) is a cylindrical depression (17).

7. Battery pack according to one of the preceding claims, **characterized in that** the depression (17) is arranged in the vicinity of electric contacts (15) of the battery pack (1).

8. Battery pack according to one of the preceding claims, **characterized in that** the depression (17) is arranged between at least two electric contacts (15) of the battery pack (1).

9. Battery pack according to one of the preceding claims, **characterized in that** the depression (17) is formed on a contact dome (7) of the battery pack (1).

10. Battery pack according to one of the preceding claims, **characterized in that** the depression (17) and/or the contact dome (7) are/is arranged eccentrically with respect to the basic surface centre (8') of the battery pack (1).

11. Battery pack according to one of the preceding claims, **characterized in that** the coding rib (23, 24) emerges from the wall (18) of the depression (17) at a position determined by a plurality of different positions, in order to form different permutations.

12. Battery pack according to one of the preceding claims, **characterized in that** at least one pair of coding ribs (55) emerges from the wall (18) of the depression (17), the coding ribs (23, 24) of which pair lie opposite each other in such a manner that they at least partially overlap.

13. Battery pack according to one of Claims 4 to 12, **characterized in that** at least one outer wall surface (22) lying opposite a region of the projection (40) is adjacent to the depression (17) which is open at the edge.

14. Battery pack according to Claim 13, **characterized in that** at least one coding rib (28) emerges from the outer wall surface (22).

15. Coding system for an electric tool provided with an insertable battery pack, in particular according to one or more of the preceding claims, wherein the battery pack has a mechanical coding, and the electric tool has an opposite mechanical coding, and the coding and the opposite coding extend in the insertion direction, and the coding (16) is in the form of at least one depression (17), and the opposite coding (39) is in the form of at least one projection (40), wherein the coding (16) and the opposite coding (39) are matched to each other so as to fit in terms of shape and engage one in the other when the battery pack (1) is pushed in, **characterized in that** a wall (18) of the depression (17) has at least one coding rib (23, 24) and the projection (40) has at least one incision (46, 47).

16. Electric tool having an opposite mechanical coding of a coding system for interaction with a mechanical coding of the coding system assigned to an insertable battery pack, wherein the opposite coding (39) extends in the insertion direction of the battery pack, and the opposite coding (39) has at least one projection (40) which interacts on opposite sides with at least one depression (17) which is on the battery-pack side and forms the coding (16), **characterized in that** the projection (40) has at least one incision (46, 47).

## Revendications

1. Bloc batterie enfichable pour un outil électrique, comprenant un codage mécanique d'un système de codage destiné à coopérer avec un codage conjugué mécanique du système de codage, associé à l'outil électrique, le codage (16) s'étendant dans la direction d'enfichage du bloc batterie et le codage (16) présentant au moins un renfoncement (17) coopérant sur des côtés opposés avec au moins une saillie (40) du côté de l'outil, formant le codage conjugué (39), **caractérisé en ce qu'**au moins une nervure de codage (23, 24) part d'une paroi (18) du renfoncement (17).

2. Bloc batterie selon la revendication 1, **caractérisé en ce que** le renfoncement (17) présente au moins deux régions de surface de paroi (19, 20) opposées l'une à l'autre de manière correspondant à l'épaisseur de la saillie (40).

3. Bloc batterie selon l'une quelconque des revendications précédentes, **caractérisé en ce que** le renfoncement (17) est un renfoncement (17) fermé sur la périphérie.

4. Bloc batterie selon la revendication 1 ou 2, **caractérisé en ce que** le renfoncement (17) est un renfoncement (17) ouvert au bord.

5. Bloc batterie selon l'une quelconque des revendications précédentes, **caractérisé en ce que** le renfoncement (17) présente une structure en projection horizontale avec un coin, polygonale, de forme courbe et/ou circulaire.

6. Bloc batterie selon l'une quelconque des revendications précédentes, **caractérisé en ce que** le renfoncement (17) est un renfoncement cylindrique (17).

7. Bloc batterie selon l'une quelconque des revendications précédentes, **caractérisé en ce que** le renfoncement (17) est disposé à proximité de contacts électriques (15) du bloc batterie (1).

8. Bloc batterie selon l'une quelconque des revendications précédentes, **caractérisé en ce que** le renfoncement (17) est disposé entre au moins deux contacts électriques (15) du bloc batterie (1).

9. Bloc batterie selon l'une quelconque des revendications précédentes, **caractérisé en ce que** le renfoncement (17) est réalisé sur un ergot de contact (7) du bloc batterie (1).

10. Bloc batterie selon l'une quelconque des revendications précédentes, **caractérisé en ce que** le renfoncement (17) et/ou l'ergot de contact (7) est/sont disposé(s) excentriquement par rapport au centre de la surface de base (8') du bloc batterie (1).

11. Bloc batterie selon l'une quelconque des revendications précédentes, **caractérisé en ce que** la nervure de codage (23, 24), pour réaliser différentes permutations sur une position déterminée parmi plusieurs positions différentes, part de la paroi (18) du renfoncement (17).

12. Bloc batterie selon l'une quelconque des revendications précédentes, **caractérisé en ce qu'**au moins une paire de nervures de codage (55) part de la paroi (18) du renfoncement (17), dont les nervures de codage (23, 24) sont opposées l'une à l'autre de telle sorte qu'elles se chevauchent au moins en partie.

13. Bloc batterie selon l'une quelconque des revendications 4 à 12, **caractérisé en ce qu'**au moins une surface de paroi extérieure (22) opposée à une région de la saillie (40), est adjacente au renfoncement ouvert au bord (17).

14. Bloc batterie selon la revendication 13, **caractérisé en ce qu'**au moins une nervure de codage (28) part de la surface de paroi extérieure (22).

15. Système de codage pour un outil électrique pourvu d'un bloc batterie enfichable notamment selon l'une quelconque ou plusieurs des revendications précédentes, dans lequel le bloc batterie présente un codage mécanique et l'outil électrique présente un codage mécanique conjugué et le codage et le codage conjugué s'étendent dans la direction d'enfichage et le codage (16) est réalisé sous forme d'au moins un renfoncement (17) et le codage conjugué (39) est réalisé sous forme d'au moins une saillie (40), le codage (16) et le codage conjugué (39) étant ajustés l'un à l'autre par correspondance géométrique et lorsque le bloc batterie (1) est enfoncé, venant en prise l'un dans l'autre, **caractérisé en ce qu'**une paroi (18) du renfoncement (17) présente au moins une nervure de codage (23, 24) et la saillie (40) présente au moins une entaille (46, 47).

16. Outil électrique comprenant un codage mécanique conjugué d'un système de codage pour une coopération avec un codage mécanique du système de codage, associé à un bloc batterie enfichable, le codage conjugué (39) s'étendant dans la direction d'enfichage du bloc batterie et le codage conjugué (39) présentant au moins une saillie (40) coopérant sur des côtés opposés avec au moins un renfoncement (17) du côté du bloc batterie, formant le codage (16), **caractérisé en ce que** la saillie (40) présente au moins une entaille (46, 47).
